# EUROPEAN PATENT SPECIFICATION

(11) **EP 0 973 670 B1**
(45) Date of publication and mention of the grant of the patent: **17.07.2002**
(21) Application number: 98917881.9
(22) Date of filing: 09.04.1998
(51) Int. Cl.: B62D 7/18

(54) **SUSPENSION FOR A NON-DRIVEN STEERABLE VEHICLE WHEEL**
AUFHÄNGUNG FÜR EIN NICHT ANGETRIEBENES, LENKBARES FAHRZEUGRAD
SUSPENSION DE ROUE MOTRICE NON DIRECTIONNELLE D'AUTOMOBILE

(30) Priority: 10.04.1997 SE 9701328
(43) Date of publication of application: 26.01.2000
(73) Proprietor: Volvo Lastvagnar AB, 405 08 Göteborg (SE)
(72) Inventor: BODIN, Jan-Olof, S-441 65 Alingsas (SE); DAGH, Ingemar, S-413 18 Gothenburg (SE)
(74) Representative: Hellbom, Lars Olof
(86) International application number: SE9800667
(87) International publication number: WO9845159

(56) References cited:
- WO-A-97/13674
- DE-A- 3 734 503
- US-A- 854 451

## Description

The present invention relates to a wheel suspension for a non-driven steerable vehicle wheel, comprising an axle member, which at each end has a conical through-bore, which holds a conical central portion of a kingpin which is provided with kingpin ends extending outside the bore into the member, and a spindle unit, having, firstly, spaced upper and lower spindle ears, holding bearings into which the kingpin ends extend and are covered by upper and lower removably fixed covers at the respective spindle ear, of which at least the upper cover is provided with a grease nipple for supplying lubricant to the upper bearing, and, secondly, an axle end on which a wheel is intended to be mounted.

In known wheel suspensions of the type described, the grease nipple in the cover is usually placed in the middle of the cover and is directed in the axial direction of the kingpin. The cover can either be provided with a number of peripherally evenly spaced through-bores which hold screws, which are screwed into bores in the spindle ear for fixing the cover. Alternatively, the cover can be provided with a radially directed peripheral flange and the spindle ear can be made with a peripheral groove in which a lock ring is placed abutting against an upper surface on the flange for fixing the cover. In the first case, the cover can be mounted without any other consideration than that the rotational position of the cover relative to the spindle ear is such that the bores in the cover and in the spindle ear coincide. Since the pressures in the grease guns used today are very high, the cover must be robustly dimensioned and a large number of screws must be used, which makes the assembly time-consuming. In the second case, the cover can be rapidly and simply mounted and the pressure from the grease gun is distributed evenly over the entire periphery of the cover and the lock ring.

The attention is drawn to DE 37 24 503, which was used to draft the preamble of claim 1.

With the grease nipple placed in the middle of the cover and oriented in the axial direction of the kingpin, it is of no consequence that none of the described alternative connections between the cover and the spindle ear guarantees a predetermined rotational orientation of the cover relative to the spindle ear, since the accessibility of the grease nipple is not affected thereby. Due to space considerations for other components supported by the wheel suspension, such as brakes for example, it can be desirable, however, to direct the grease nipple laterally to reduce the total length of the upper spindle bearing, and in this case it is important that the cover and thus the grease nipple when mounted assume a predetermined position, in which the grease nipple is directed in that direction from which it is most easily accessible. This is generally desirable when using disc brakes in heavy vehicles, where the brake caliper should preferably be placed above the upper spindle bearing to facilitate assembly and service. In this connection, reference is made to SE-A-9004020-5. which shows and describes an inverted spindle bearing, the purpose of which is to reduce the total assembled height of the upper spindle bearing.

The purpose of the present invention is in general to achieve a wheel suspension described by way of introduction, which is made so that the cover in at least the upper spindle ear can be mounted rapidly and simply while assuring a predetermined position of the grease nipple, in which the grease nipple is easily accessible even when using a disc brake which has a brake caliper placed above the upper spindle ear.

This is achieved according to the invention by virtue of the fact that the upper spindle ear above the bearing seat has a portion with a thread, that the upper cover has a portion with a thread engaging the thread in the spindle ear, and that the grease nipple is arranged to one side of the center axis of the thread.

The entry to the thread and the tightening torque of the cover determine in this case where the grease nipple will end up when assembled and it is thus simple to determine a position in which the best accessibility is obtained. With the same tightening torque, the same position of the grease nipple is always obtained.

The assembly can be performed more rapidly than when a number of screws must be screwed into the bores in the cover and the spindle ear. The grease pressure when using a grease gun to lubricate the bearing is taken up evenly around the entire edge of the cover and not only at its screw locations.

In a further development of the wheel suspension according to the invention, the extension of the center axis of the axle end intersects the center axis of the conical bore at a point located at a distance from the upper end of the conical bore which is less than a third of the length of the conical bore.

By replacing a centrally placed upwardly directed grease nipple with a laterally directed nipple in a lateral surface of the cover, the highest point of the spindle is moved downwards relative to the wheel axle and the wheel. By also moving the axle end upwards relative to the spindle, the highest point of the spindle is moved downwards and by virtue of these two steps, it is possible to use a single basic design of the wheel suspension either with a drum brake or a disc brake.

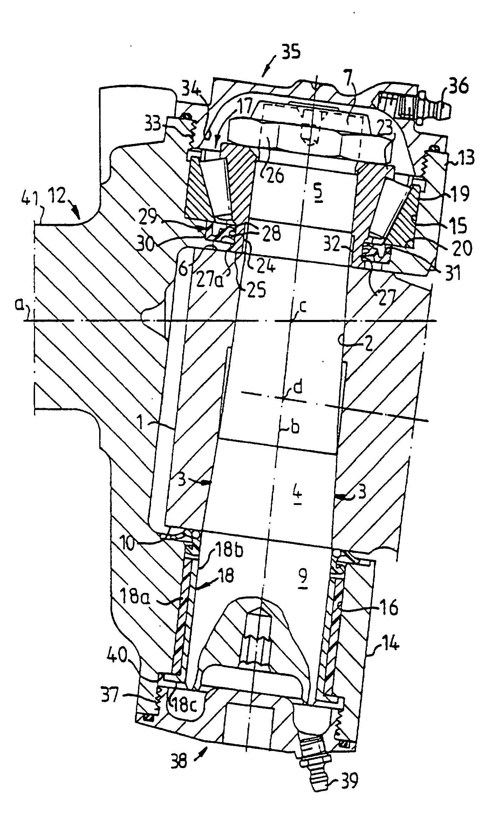

The invention will be described in more detail below with reference to an example shown in the accompanying drawing, where the Figure shows a longitudinal section through one embodiment of a wheel suspension according to the invention.

In the Figure, 1 designates one end of a front member in a motor vehicle. The member 1 has a bore 2 of truncated conical shape along most of its length. A kingpin, generally designated 3, with a middle portion 4 with the same conicity as the bore 2, is fixed in the bore. An upper cylindrical kingpin end 5 extends above an upper end surface 6 of the member 1 and has a threaded portion 7 at its very end. A corresponding lower cylindrical kingpin end 9, but without the threaded portion at the very end, extends below a lower end surface 10 on the member 1.

A wheel spindle, generally designated 12, has an upper spindle ear 13 and a lower spindle ear 14, which are each made with an individual bearing seat 15 and 16, respectively, for an upper taper roller bearing 17 and a lower journal bearing 18, respectively. The lower journal bearing 18 consists of an outer sleeve 18a of an elastically deformable plastic material and an inner sleeve 18b of a bearing metal. The upper bearing rests with its outer ring 19 against an upwardly facing surface 20 of the upper bearing seat 15. The upper kingpin end 5 protrudes into the inner ring 23 of the upper bearing 17, which is made in one piece with a spacer sleeve 24, which abuts against the upwardly facing surface 6 of the member 1 with an end surface 25. By tightening a nut 26 screwed onto the threaded portion 7, the bearing ring 23 is clamped with its spacer sleeve 24 against the member 1 and is rotationally fixed. The lower kingpin end 9 protrudes into the inner bearing sleeve 18b of the lower journal bearing 18. Its outer sleeve 18a is pressed into the bearing seat 16 in the lower spindle ear 14. The axial position of the bearing 18 in the seat 16 is determined by a flange 18c on the inner bearing sleeve 18b, said flange forming an abutment against an end surface 40 on the lower spindle ear 14.

The outer cylindrical surface of the spacer sleeve 24 is made with a peripheral groove 27 into which the sealing lips 28 on an elastic sealing ring, generally designated 29, extend and abut with their end surfaces against the bottom of the groove 27. The flange 27a, formed by the groove 27, forms an abutment which keeps the seal in place during assembly. The portion 30 of the sealing ring 29 opposite the sealing lips 28 has an essentially L-shaped cross-sectional profile and is mounted in a seat 31 in the upper spindle ear 13.

The upper spindle ear 13 has an inner threaded portion 33 above the bearing seat 15, into which an externally threaded flange 34 on a cover 35 is screwed, so that a space sealed off by the sealing ring 29 and the cover 35 is formed for lubricant. The cover 35 is provided with a laterally directed grease nipple 36. The entry of the thread is selected so that the grease nipple 36, after the cover has been screwed down, will assume a predetermined position in which it is easily accessible during service. The lower spindle ear 14 has a corresponding internally threaded portion 37, into which an externally threaded cover 38 with a grease nipple 39 is screwed.

As can be seen in the Figure, the wheel axle end 41 is made in one piece with the wheel spindle 12. The position of the axle end 41 is displaced upwards so that an extension of its center axis "a" intersects the center axis "b" of the bore at a point "c", lying at a distance from the midpoint "d" of the bore 2, which is the point at which the center axis of the axle end 41 normally crosses the bore axis "b". In the embodiment shown, the distance from the point of intersection "c" to the upper end of the bore 2 is somewhat less than a fourth of the total length of the bore in contrast to the normal situation where it is approximately half of the length. By this "offset" placement of the axle end 41, the upper cover 35 is given a lower placement relative to the wheel axle and consequently also relative to the wheel than in "normal" placement. This arrangement has made it possible to use the described wheel suspension both for drum brakes and for disc brakes.

## Claims

1. Wheel suspension for a non-driven steerable vehicle wheel, comprising an axle member (1), which at each end has a conical through-bore (2), which holds a conical central portion of a kingpin (3) which is provided with kingpin ends (5, 9) extending outside the bore (2) into the member (1), and a spindle unit (12), having, firstly, spaced upper and lower spindle ears (13, 14) with bearing seats, which hold bearings into which the kingpin ends (5, 9) extend and which are covered by upper and lower removably fixed covers (35, 38) at the respective spindle ears, at least the upper of said covers (35) being provided with a grease nipple (36) for supplying lubricant to the upper bearing (17), and, secondly, an axle end (41) on which a wheel is intended to be mounted, **characterized in that** the upper spindle ear (13) above the bearing seat (15) has a portion with a thread (33), that the upper cover (35) has a portion (34) with a thread engaging the thread in the spindle ear, and that the grease nipple (36) is arranged to one side of the center axis (c) of the thread.

2. Wheel suspension according to Claim 1, **characterized in that** the nipple (36) has a threaded portion which is screwed into a threaded laterally directed bore in the cover.

3. Wheel suspension according to Claim 1 or 2, **characterized in that** the upper spindle ear (13) has an internally threaded portion and the cover has a corresponding externally threaded portion (34), which is screwed into the threaded portion of the spindle ear.

4. Wheel suspension according to Claim 2 or 3, **characterized in that** the threads (33) are so disposed in the spindle ear (13) and in the cover (35) that, after a predetermined tightening of the cover in the spindle ear, the grease nipple (36) faces away from the axle end (41) of the spindle (12).

5. Wheel suspension according to one of Claims 1-4, **characterized in that** the lower spindle ear (14) below the bearing seat (16) has a portion with a thread (37), that the lower cover has a portion with a thread engaging the thread in the spindle ear, and that a grease nipple (39) is arranged to one side of the center axis (c) of the thread.

6. Wheel suspension according to one of Claims 1-5, **characterized in that** the extension of the center axis (a) of the axle end (41) intersects the center axis (b) of the conical bore (2) in a point (c) located a distance from the upper end of the conical bore which is less than half of the length of the conical bore (2).

## Patentansprüche

1. Radaufhängung für ein nicht-angetriebenes, lenkbares Fahrzeugrad, die ein Achselement (1) aufweist, das an jedem Ende eine konische Durchgangsbohrung (2) besitzt, welche einen konischen zentralen Abschnitt eines Achsschenkelbolzens (3) hält, der sich außerhalb der Bohrung (2) in das Element (1) erstreckt, und eine Achseinheit (12) aufweist, die erstens beabstandete obere und untere Achszapfen (13, 14) mit Lagersitzen besitzt, die Lager halten, in welche die Achsschenkelbolzenenden (5, 9) sich erstrecken und welche durch obere und untere, lösbar befestigte Abdeckungen (35, 38) an den entsprechenden Achszapfen abgedeckt sind, wobei zumindest die obere der Abdeckungen (37) mit einem Schmiernippel (36) zum Zuführen von Schmiermittel zu dem oberen Lager (7) ausgestattet ist, und zweitens ein Achsenende (41) besitzt, das zum Montieren eines Rades darauf vorgesehen ist, **dadurch gekennzeichnet, dass** der obere Achszapfen (13) oberhalb des Lagersitzes (15) einen Abschnitt mit einem Gewinde (33) besitzt, dass die obere Abdeckung (35) einen Abschnitt (34) mit einem Gewinde besitzt, das in das Gewinde des Achszapfens eingreift, und dass der Schmiernippel (34) auf einer Seite der Mittelachse (c) des Gewindes angeordnet ist.

2. Radaufhängung nach Anspruch 1, **dadurch gekennzeichnet, dass** der Nippel (36) einen Gewindeabschnitt besitzt, der in eine seitlich ausgerichtete Gewindebohrung in der Abdeckung eingeschraubt ist.

3. Radaufhängung nach Anspruch 1 oder 2, **dadurch gekennzeichnet, dass** der obere Achszapfen (13) einen inneren Gewindeabschnitt besitzt, und dass die Abdeckung einen entsprechenden, äußeren Gewindeabschnitt (34) besitzt, der in den Gewindeabschnitt des Achszapfens eingeschraubt ist.

4. Radaufhängung nach Anspruch 2 oder 3, **dadurch gekennzeichnet, dass** die Gewinde (33) derart in dem Achszapfen (13) und in der Abdeckung (35) vorgesehen sind, dass nach einem vorbestimmtem Anziehen der Abdeckung in dem Achszapfen der Schmiernippel (36) von dem Achsende (41) der Achse (12) abgewandt ist.

5. Radaufhängung nach einem der Ansprüche 1 - 4, **dadurch gekennzeichnet, dass** der untere Achszapfen (14) unterhalb des Lagersitzes (16) einen Abschnitt mit einem Gewinde (37) besitzt, dass die untere Abdeckung einen Abschnitt mit einem Gewinde besitzt, das in das Gewinde in dem Achszapfen eingreift, und dass ein Schmiernippel (39) auf einer Seite der Mittelachse (c) des Gewindes angeordnet ist.

6. Radaufhängung nach einem der Ansprüche 1 - 5, **dadurch gekennzeichnet, dass** die Erstreckung der Mittelachse (a) des Achsenendes (41) die Mittelachse (b) der konischen Bohrung (2) in einen Punkt (c) schneidet, der in einem Abstand von dem oberen Ende der konischen Bohrung liegt, der geringer ist als die Hälfte der Länge der konischen Bohrung (2).

## Revendications

1. Suspension de roue pour une roue de véhicule directrice non entraînée, comprenant un élément formant axe (1) qui comporte, à chaque extrémité, un alésage conique traversant (2), qui supporte une partie centrale conique d'une fusée pivot (3) qui présente des extrémités de broche pivot (5, 9) s'étendant à l'extérieur de l'alésage (2) dans l'élément (1), et une unité de broche (12), comportant, d'une part, des oreilles de fusée supérieure et inférieure (13, 14) avec des sièges de paliers, qui supportent des paliers dans lesquels s'étendent les extrémités de broche pivot (5, 9) et qui sont recouverts par des couvercles supérieurs et inférieurs (35, 38) fixés de manière amovible sur les oreilles de fusée respectives, au moins le couvercle supérieurè desdits couvercles (35) comportant un graisseur (36) destiné à délivrer du lubrifiant au palier supérieur (17) et, d'autre part, une extrémité de fusée (41) sur laquelle une roue doit être montée, **caractérisée en ce que** l' oreille de fusée supérieure (13) au-dessus du siège de palier (15) comporte une partie avec un filetage (33), **en ce que** le couvercle supérieur (35) présente une partie (34) avec un filetage s'assemblant dans le filetage de l' oreille de fusée, et **en ce que** le graisseur (36) est agencé sur un côté de l'axe central (c) du filetage.

2. Suspension de roue selon la revendication 1, **caractérisée en ce que** le graisseur (36) comporte une partie filetée qui est vissée dans un alésage fileté orienté latéralement dans le couvercle.

3. Suspension de roue selon la revendication 1 ou 2, **caractérisée en ce que** l' oreille supérieure de fusée de broche (13) présente une partie filetée à l'intérieur et le couvercle présente une partie filetée à l'extérieur correspondante (34), qui est vissée dans la partie filetée de l'oreille de fusée.

4. Suspension de roue selon la revendication 2 ou 3, **caractérisée en ce que** les filetages (33) sont disposés sur la chape de broche (13) et sur le couvercle (35) de telle sorte qu'après un serrage prédéterminé du couvercle sur la chape de broche, le graisseur (36) est orienté à l'opposé de l'extrémité de fusée (41) de l'unité de broche (12).

5. Suspension de roue selon l'une des revendications 1 à 4, **caractérisée en ce que** la chape inférieure de broche (14) au-dessous du siège de palier (16) présente une partie avec un filetage (37), **en ce que** le couvercle inférieur présente une partie avec un filetage s'assemblant sur le filetage de la chape de broche et **en ce qu'**un graisseur (39) est agencé d'un côté de l'axe central (c) du filetage.

6. Suspension de roue selon l'une des revendications 1 à 5, **caractérisée en ce que** l'extension de l'axe central (a) de l'extrémité de fusée (41) coupe l'axe central (b) de l'alésage conique (2) en un point (c) situé à une certaine distance par rapport à l'extrémité supérieure de l'alésage conique qui est inférieure à la moitié de la longueur de l'alésage conique (2).
